(19) Europäisches Patentamt
European Patent Office
Office européen des brevets

(11)  **EP 1 673 730 B1**

(12)  **EUROPEAN PATENT SPECIFICATION**

(45) Date of publication and mention
of the grant of the patent:
**13.06.2012   Bulletin 2012/24**

(21) Application number: **04795107.4**

(22) Date of filing: **14.10.2004**

(51) Int Cl.:
*G06T 7/20* (2006.01)

(86) International application number:
**PCT/US2004/033902**

(87) International publication number:
**WO 2005/038718 (28.04.2005 Gazette 2005/17)**

(54)  **MULTI-STAGE MOVING OBJECT SEGMENTATION**

MEHRSTUFIGE SEGMENTIERUNG BEWEGLICHER OBJEKTE

SEGMENTATION D'OBJET EN MOUVEMENT A ETAPES MULTIPLES

(84) Designated Contracting States:
**DE FR GB IT**

(30) Priority:  **14.10.2003   US 684865**

(43) Date of publication of application:
**28.06.2006   Bulletin 2006/26**

(73) Proprietor: **Honeywell International Inc.**
**Morristown, NJ 07960 (US)**

(72) Inventors:
• **HAMZA, Rida, M.**
**Eagan, MN 55122 (US)**
• **AU, Kwong, W.**
**Bloomington, MN 55437 (US)**

(74) Representative: **Buckley, Guy Julian**
**Patent Outsourcing Limited**
**1 King Street**
**Bakewell**
**Derbyshire DE45 1DZ (GB)**

(56) References cited:
**EP-A- 0 397 206     US-A1- 2003 025 599**

• **MORELLAS V., PAVLIDIS I., TSIAMYRTZIS P.: "DETER: Detection of events for threat evaluation and recognition" MACHINE VISION AND APPLICATIONS, vol. 15, no. 1, 23 July 2003 (2003-07-23), pages 29-45, XP002314874**

EP 1 673 730 B1

**Description**

**Field of the Invention**

The present invention relates to moving object segmentation in a video sequence, and in particular to moving object segmentation utilizing multiple stages to reduce computational load.

**Background of the Invention**

Detection of events happening in a monitored area is very important to providing security of the area. Some typical areas include large open spaces like parking lots, plazas, airport terminals, crossroads, large industrial plant floors, airport gates and other outdoor and indoor areas. Humans can monitor an area, and easily determine events that might be important to security. Such events include human and vehicular traffic intrusions and departures from a fixed site. The events can be used in an analysis of traffic and human movement patterns that can be informative and valuable for security applications.

A variety of moving object segmentation techniques have been used to detect events in an area. For fixed/static cameras some techniques utilize: temporal differencing, background separation and adaptive background separation. Temporal differencing is adaptive to dynamic changes but usually fails to extract all the relevant objects, and can be easily confused by environmental nuances such as cast shadows, and ambient light changes.

Background separation provides more reliable solution than many temporal solutions, but is extremely sensitive to dynamic scene changes. A standard method of constructing an adaptive background for ' a dynamic scene is averaging the frames over time, creating a background approximation that is similar to the current static scene except where motion occurs. While this is effective in situations where objects move continuously and the background is visible a significant portion of the time, it is not robust to scenes with many moving objects particularly if they move slowly. It also cannot handle bimodal backgrounds, recovers the background slowly when it is uncovered, and has a single, predetermined threshold for the entire scene.

Changes in scene lighting can cause problems for the motion detection methods. One background method models each pixel with a Kalman Filter which makes the system more robust to lighting changes and cast shadows in a typical scene. While this method is based on a pixel-wise automatic thresholding for adaptation, it still recovers the background slowly and does not handle bimodal backgrounds well.

A further method includes implementation of a pixel-wise Expectation Maximization (EM) framework for detection of vehicles. The technical approach of this method attempts to explicitly classify the pixel values into three separate predefmed distributions representing the background, foreground, and noise. Another more advanced moving object detection method is based on a mixture of normal representations at the pixel level. This mixture modeling method features an advanced motion detection approach in which a mixture of normal distributions reflects the expectation that more than one background characteristics at each pixel may be observed over time. This approach is well suited for outdoor applications with dynamic scenes.

Some previous approaches simply model the values of a particular pixel as a mixture of Gaussians. Based on the persistence and the variance of each of the Gaussians of the mixture, the approach determines which Gaussians correspond to background colors. Pixel values that do not fit the background distributions are considered foreground until their distributions are adapted into the scene and persistently became part of the background representation with sufficient, consistent evidence.

Following a similar approach a further method models each pixel in an image as a mixture of multiple tri-variate normal distributions. The method attempts to explicitly classify the pixel values into 5 weighted distributions, a few of which represent the background and the rest are associated with the foreground. The distributions are continuously updated to account for the dynamic change within the scene. Attempts to mediate the effect of changes in lighting conditions, and other environmental changes (e.g. snow, swaying tree leaves, rain, etc.) are successful, but it is all on the account of using more of the CPU capacity even for low resolution images and at slow frame rates. This computational burden has resulted in a limitation on the system use.

There is a need for a system that is robust and also fast and practical to implement for real-time operations. Robustness refers to detecting consistent true motion of an object while not generating false alarms on noisy movement and variations in illumination, weather, and environmental conditions. Fast processing refers to the capability of a processor to detect all motions in all frames for multiple input sequences.

US-A-2003/025599 and "Deter: detection of events for threat evaluation and recognition" machined vision and application, vol 15, no.1, 23 July 2003, pages 29 to 45, both disclose methods for identifying the currents of an event at a remote location using video motion detection.

A method of detecting motion in a monitored area receives video or image frames of the area. A high speed motion detection algorithm is used to remove still frames in which a less than minimal amount of motion is portrayed. The remaining frames are subjected to a high performance motion detection algorithm to detect true motion from noise. The present invention in its various aspects is as set out in the appended claims.

A multi-stage process is used for motion segmentation. A first screening stage applies a fast video motion segmentation (VMS) to reject still images that do not portray any motion. A second stage, which is invoked when necessary, applies a robust VMS to detect the true motion of an object. Sequencing, initialization and adaptive updating of the stages is provided by a resource management controller.

In one embodiment, the fast VMS stage is based on intelligent sampling of video frames, operating in a single-pixel or multiple-pixel block mode, in an uncompressed- or compressed-image domain, and simplistic frame differencing approach.

Several approaches are selectively employed to reduce computational resource requirement for the second, robust VMS stage. Color separation is employed where appropriate. Grey pixels are sensitive in the RGB domain and are modeled separately. Since only luminance is required for representing a scene in grey, utilizing the grey model where it provides adequate detectability of motion reduces computational resource requirements.

A further approach employs non-uniform sampling. In other words, a scene may be divided into different areas whose pixels are grouped in different sizes depending on a desired resolution. Smaller pixel-block size areas or blocks are used for areas where motion likely occurs and higher resolution is desired. The number of pixels in a block may also be varied based on depth of field and range to target in order to maintain a consistent object size in pixel.

Adaptive mixture modeling is also provided based on operation environments. A fast technique adapts the number of normal distributions in the mixture modeling. The number of mixture is based on the amount of insignificant changes in the scene and how dynamic that change is. The technique coops well with multi-modal backgrounds (e.g. swaying tree branches, etc), whereas a single normal distribution may be used for stable scenes, especially for indoor applications. Distributions of Sample Moments, similar to K-means, are used to initialize the models, rather than the cumbersome expectation maximization (EM). In one embodiment, a Look-Up-Table (LUT) registers the indices of frames' clusters for weight updates. Initial weights and distribution values are computed based on a predefined set of N frames. The set is clustered into subsets. Each subset represents the population of each distribution. The weights of each distribution is the ratio of the number of samples per subset over the predefined number of the initialization frames, i.e. N. In contrast to EM approximation, the approach provides more accurate initial statistical support that facilitates fast convergence and more stable performance of the segmentation operations.

A FIFO (first in, first out) procedure is used to update the mixing proportions weights of the mixture models with no thresholds or learning parameters. Weights are updated based on the new counts of samples per each distribution. The first frame entered in the LUT will be excluded out of the record to update the weights of each classes of distributions. When a match is found, the non-matching distribution (representing foreground) counter is set to zero. The LUT is updated by excluding the first index and including the new record. The weights are updated based on the new variation in the subsets. If there is no match, the foreground distribution counter is incremented. Weights of background distributions are kept the same. The smallest distribution is replaced, once an adequate number of consecutive hits of the foreseen foreground is reached. During the replacement of the smallest distribution with the new foreground distribution adapting to be part of the new background, no weights will be updated. Updates will follow afterwards using the above role. These approaches reduce computational requirements to make the approach well suited to real-time applications.

BRIEF DESCRIPTION OF THE DRAWINGS

FIG. 1 is a block diagram of an example moving object segmentation system.

FIG. 2 is a diagram of an example sampling method used in the moving object segmentation system of FIG. 1.

FIG. 3 is a block diagram illustrating block element selection for an example high speed moving object segmentation subsystem of FIG. 1.

FIGS. 4A, 4B and 4C are representations of various modeling approaches showing different numbers of normal distributions.

FIG. 5 illustrates updating mixing proportions weights in a mixture model.

FIG. 6 is a block diagram of a typical computer system for executing software implementing at least portions of the moving object segmentation system

Detailed Description of the Invention

In the following description, reference is made to the accompanying drawings that form a part hereof, and in which is shown by way of illustration specific embodiments in which the invention may be practiced. These embodiments are described in sufficient detail to enable those skilled in the art to practice the invention, and it is to be understood that other embodiments may be utilized and that structural, logical and electrical changes may be made without departing from the scope of the present invention as defined by the appended claims. The following description is, therefore, not to be taken in a limited sense, and the scope of the present invention is defined by the appended claims.

The functions or algorithms described herein are implemented in software or a combination of software and human implemented procedures in one embodiment. The software comprises computer executable instructions stored on computer readable media such as memory or other type of storage devices. The term "computer readable media" is also used to represent carrier waves on which the software is transmitted. Further, such functions correspond to modules, which are software, hardware, firmware or any combination thereof. Multiple functions are performed in one or more modules as desired, and the embodiments described are merely examples. The software is executed on a digital signal processor, ASIC, microprocessor, or other type of processor operating on a computer system, such as a personal computer, server or other computer system.

A multi-stage process is used for motion segmentation. A first screening stage applies a fast video motion segmentation (VMS) to reject still images that do not portray any motion. A second stage, which is invoked when necessary, applies a robust VMS to detect the true motion of an object.

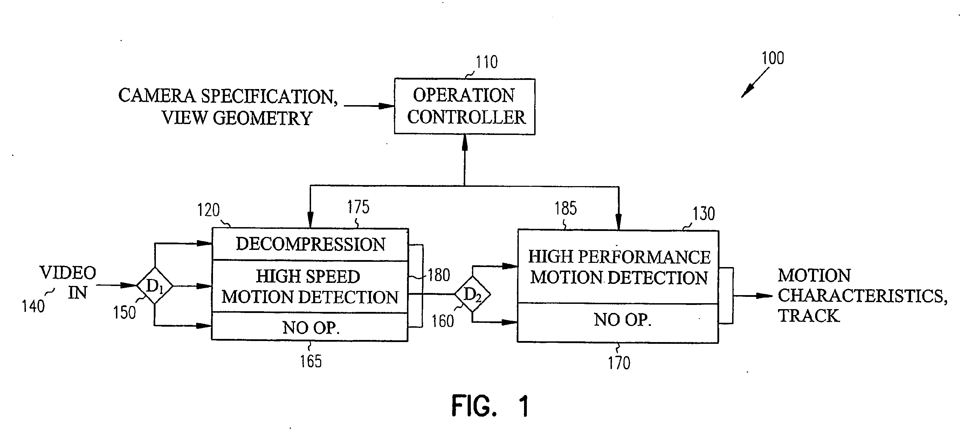

In one example of the invention, three modules work synergistically to provide the optimal functional and computational performances in detecting motion in a video sequence as indicated at 100 in FIG. 1. The three modules are an operation controller (OC) 110, a high speed motion detection (HSMD) module 120, and a high performance motion detection (HPMD) module 130. OC 110 is a resource management unit that essentially sets operational parameters for the modules and guides operational flow. HSMD 120 is a screening unit that receives video from a scene at 140 and quickly removes the motionless video frames. HSMD 130 is a robust unit that detects true object motion and weeds out other noisy annoyances. It receives video frames that are passed to it by HSMD 120.

Operation Controller: Operation Controller (OC) module 110 serves as a resource management unit that maintains the frame rate and functional performance via setting the processing-speed-related parameters. To maintain the frame rate, some video frames will be skipped and not processed. The OC computes a maximum allowable number of frames to be skipped based on the speed of the expected objects, the camera frame rate and the physical area coverage within the field of view (FOV). When the actual processing frame rate falls behind the desirable rate, the OC skips processing up to the maximum allowable number of frames. This is achieved by setting the $D_1$ and $D_2$ decision blocks 150 and 160 respectively to "No Op." as represented at 165 and 170 in the motion detection modules.

The operation controller also directs the operation flow which consists of initialization and motion detection. Executing the alternative operation flow achieves overall high speed, high performance motion detection and tracking.

**Initialization:**

The operation controller 110 directs an initialization process for the HSMD and the HPMD during the startup. Another condition to execute the HSMD and the HPMD initialization processes is when the video camera carries out a pan and tilt operation. The OC calls the HSMD initialization when the HPMD completes a motion detection sequence. In addition, the OC also calls the HSMD initialization, when a different HSMD function is selected.

**Motion detection operation flow:**

The OC sets the conditions in the $D_1$ 150 and $D_2$ 160 decision blocks, which directs the input and output data to the appropriate processing modules. The $D_1$ decision block directs the input video frame to a decompression module 175, HSMD sub-module 180, or the No Op module 165. The $D_2$ decision block directs the output video frame from stage one to a HPMD sub-module 185 or the No Op module 170. The rules in setting the $D_1$ and $D_2$ blocks are:

- HSMD is selected after initialization startup.
- When the HSMD module detects motion, HPMD is selected.
- The HPMD module requires periodical updates. When the update time is reached, the HPMD module will be selected.
- When the HSMD module does not detect motion and the HPMD module does not need update, the No Op module in the second stage will be selected.
- When the HPMD module detects motion in the $(n-1)^{th}$ frame, Decompression module will be selected in the $n^{th}$ frame if the video in 140 is compressed.
- When the decompression module is selected, the HPMD module will also be selected.
- When a skip frame decision is made, both No Op modules will be selected.

**Function selection in HSMD module:**

Several functions can be applied in the HSMD module. Each function achieves different functional and computational performances. OC selects the proper function based on the desirable frame rate, the object whose motion is of interest, and the scene complexity.

**Parameter setting in the HSMD and HPMD modules:**

OC computes the values of critical functional and computational parameters in the HSMD and HPMD modules. Some of the parameters include the video frame boundary, the number of DCF coefficients to compute HSMD motion detection, and subsample pattern.

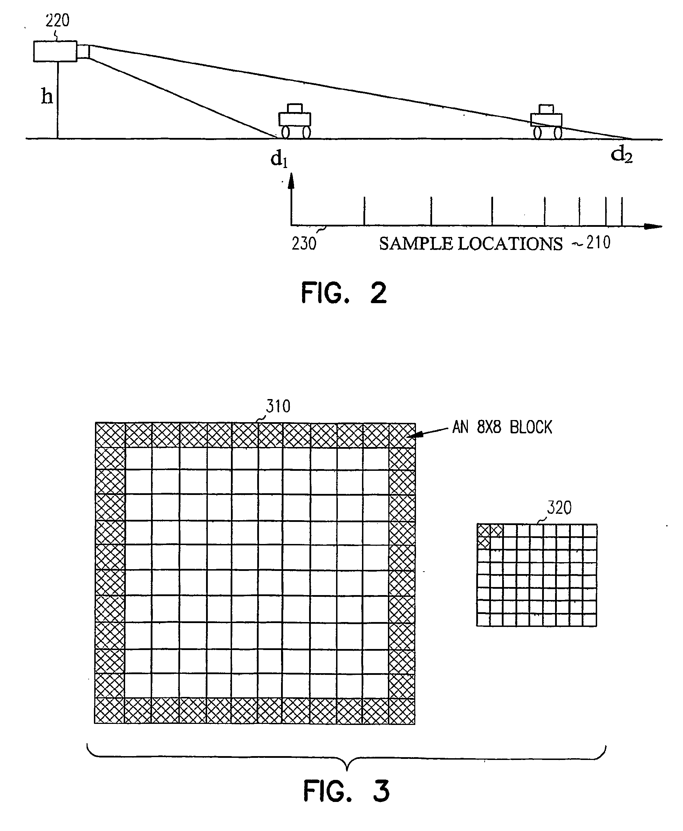

The frame size often is so large that number of computations on all pixels is astronomical. Subsamples of the video frame are necessary to maintain the desirable processing frame rate. A uniform sample in both the row and column dimensions is frequently used. Some approaches apply different sample rates in the row and column dimensions. The sample rate, however, is uniform across each direction. In one embodiment, the sampling approach, as illustrated in FIG 2, is one that is based on constant object resolution in the image domain. The key is to keep the object size in the image domain approximately the same no matter whether the object is in the near side or far side of the field of view (FOV). As seen in FIG. 2, sample locations 210 further away from a camera 220 are more closely spaced than sample locations 230 that are closer to camera 220.

**High Speed Motion Detection:**

The high speed motion detection module 120 achieves the high speed performance via a combination of two approaches. The first approach is to detect motion in the transformed domain when the input video frame is compressed. This approach avoids the intense, inverse transform computation, e.g., the inverse DCF in the JPEG video stream. In addition, in some embodiments, detections along the boundaries of the FOV are limited, assuming that the camera 220 is mounted on a fixed site and that the motion enters into the FOV across its boundaries first. This approach can be applied to compressed or non-compressed video frames. FIG. 3 at 310 illustrates the elements selected for motion detection processing. The number of boundary layers and number of elements in each block 320 are determined by the operation controller 110 based on the object size, and the video frame size.

**High Performance Motion Detection:**

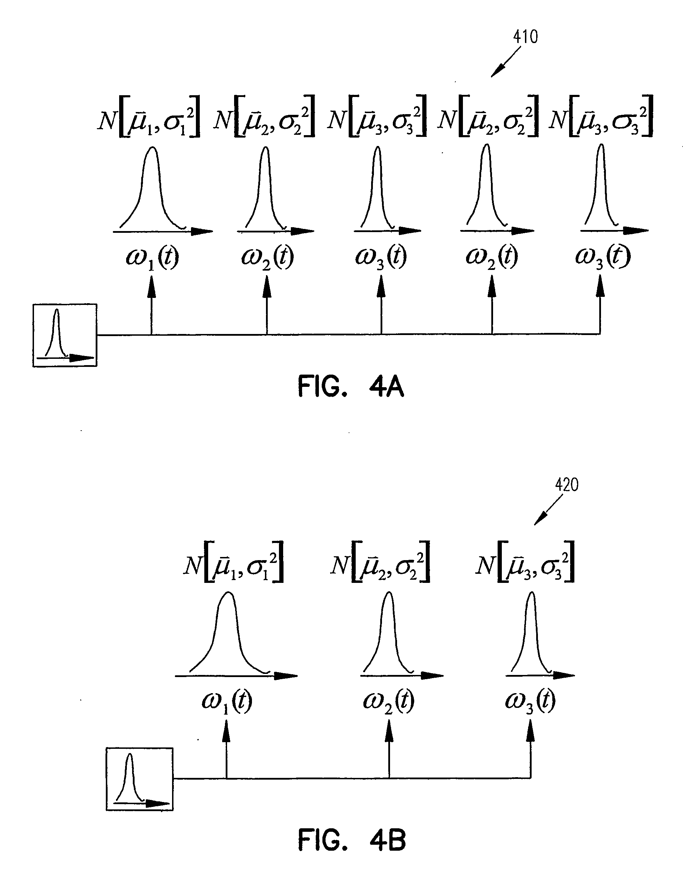

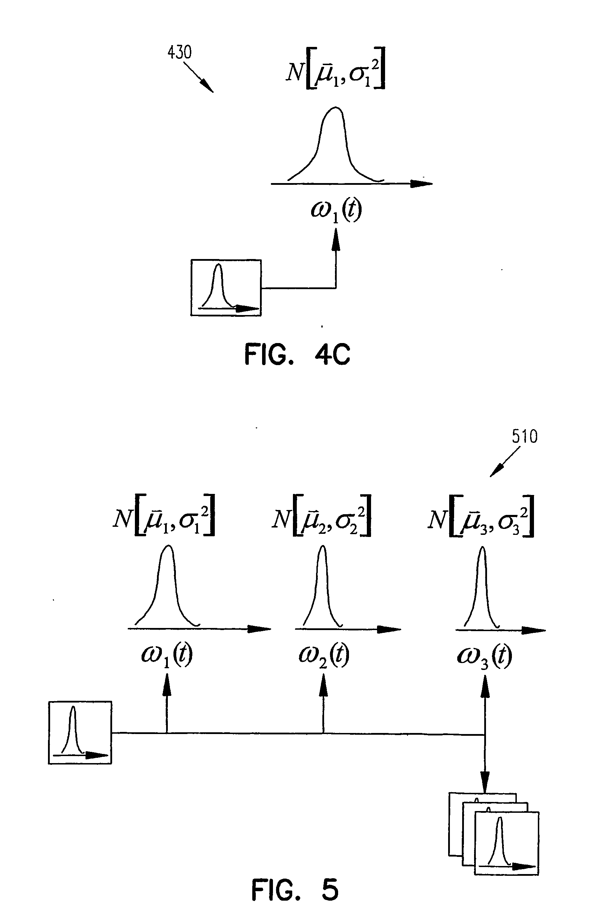

Distributions of sample moments shown at 410 in FIG. 4A, are used to initialize models that model an area to be monitored. An adaptive mixture model is configured based on operation environments. In one embodiment, N, such as approximately 70 to 100 or more consecutive images are processed to initialize a model. Five normalized distributions that provide the strongest evidence are selected to model a background in a monitored area. The number of distributions is varied in one embodiment based on the amount of insignificant changes in a scene, and how dynamic the change is. Three distributions 420 are illustrated in FIG. 4B for moderate scene changes, and a single distribution is shown for single modeling at 430 in FIG. 4C. This model is useful for stable scenes, such as indoor applications. The model with the higher number of distributions is used to deal robustly with lighting changes, dynamic scene motions, tracking through cluttered regions and coping well with insignificant slow-moving objects in a nominal open space (e.g. swaying tree branches, drops of snow or rain, dropped leaves due to winds, ambient light changes due to car headlights, etc. The model for the background distribution is maintained even if it is temporarily replaced by another distribution which leads to faster recovery when objects are removed.

The approach provides more accurate initial statistical support that facilitates fast convergence and more stable performance of the segmentation operations. An improved divergence measure is used as the matching criterion between normal distributions of incoming pixels/blocks and existing pixel or blocks model distributions. A modified Jefferey's divergence measure is an accurate and simplified measure to the fixed values (constant incoming variance) as illustrated below.

**Modified Jeffrey's divergence measure:**

A modified measure is based upon the Jeffrey's divergence to measure similarity and divergence among distributions. The procedure is similar to the earlier approaches where the algorithm checks if the incoming pixel/ROI value can be ascribed to any of the existing normal distributions. The matching criterion used is referred to as modified Jeffrey's divergence measure.

While Jeffrey's divergence measure (J) H. Jeffreys, "Theory of Probability," Universal Press, Oxford, 1948, is used, unlike earlier work, the measure is reformulated to fit the application in hand. Thus, a much simpler formulation of Jeffrey's measure used is manageable to be computed in real time while preserving the accuracy and integrity of Jeffrey's formula.

Jeffrey's measure of information associated with the probability distribution of g and $f_i$ (where

$f_i \sim N_3(\vec{\mu}_i, \sigma_i^2 I)$ and $g \sim N_3(\vec{\mu}_g, \sigma_g^2 I)$ is given by

$$J(Fi, g) = \frac{3}{2}(\frac{\sigma_i}{\sigma_g} - \frac{\sigma_g}{\sigma_i})^2 + \frac{1}{2}\left(\frac{1}{\sigma_i^2} + \frac{1}{\sigma_g^2}\right)\left(\vec{\mu}_g - \vec{\mu}_i\right)^T\left(\vec{u}_g - \vec{u}_i\right) \qquad (I)$$

$J(f_i, g)$ is the symmetric measure of directed divergence as shown in (MPT)V. Morellas, Y. Pavlidis, et al, "DETER: Detection of Events for Threat Evaluation and Recognition," 1999.. Since the $J(f_i, g)$ measure relates to distributions and not to data points, the incoming pixels data points are modeled with a fixed, predefined distribution regardless of the application and conditions. In fact, the incoming distribution $g \sim N_3(\vec{\mu}_g, \sigma_g^2 I)$ is assumed to have $\overline{\mu}_g = \overline{x}(t)$; $\sigma_g^2 = const$. The choice of the constant variance was based on some experimental observations. $\sigma_g^2$ may not be predefined as it varies with the operating environments. Better estimates of the incoming distribution are dependent upon the current operations and not predefined constants. While this approximation is framed to simplify the divergence measure, estimates of the incoming distribution yield a much compact form of divergence measure. This simplified formulation is referred to as a modified Jeffrey's measure. The new measure is equivalent to the original Jeffrey's measure.
To model the incoming dist., g, two assumptions are introduced to simplify the formulations:

$\Rightarrow \overline{\mu}_g = \dot{\overline{x}}(t)$; The mean vector of the incoming dist is set to be equivalent to the incoming measurement. This is similar to the earlier approach.
$\Rightarrow$ The variance depends upon the current distribution variance, our hypothesis, i.e. $\sigma_g^2$ is a scalar of $\sigma_i^2$, or $\sigma_g^2 = \alpha_i \sigma_i^2$ where $\alpha_i$ is a dependency scalar.

Thus eq (I) can be rewritten as follows:

$$J(f_i, g) = \frac{3}{2}(\alpha_i - \frac{1}{\alpha_i})^2 + \frac{1}{2\sigma_i^2}\left(1 + \frac{1}{\alpha_i^2}\right)\left(\vec{\mu}_g - \vec{\mu}_i\right)^T\left(\vec{u}_g - \vec{u}_i\right)$$

$$(II)$$

To have an equal-likelihood estimate, assume $\alpha_i = \alpha$ (i.g. similar factor across all distributions) for simplicity without loss of generalization. Hence, the first term becomes

$$\Rightarrow \quad 1st\ term = \frac{3}{2}(\alpha - \frac{1}{\alpha})^2 = const,$$

as an additive constant and can be dropped from measurement.

$$\Rightarrow \quad In\ 2nd\ term, \frac{1}{2}\left(1 + \frac{1}{\alpha^2}\right) = \delta,$$

Thus the term becomes a scalar factor and

can be also excluded from measure.
Hence the new measure is

$$\tilde{J}(f_i, g) = \frac{1}{\sigma_i^2}\left(\overrightarrow{\mu_g} - \overrightarrow{u_i}\right)^T\left(\overrightarrow{\mu_g} - \overrightarrow{\mu_i}\right) \qquad \text{(III)}$$

Equation (III) presents the new Modified Jeffery's divergence measure, which is greatly simplified. The divergence measure is an unbiased estimate as shown in the counter example below.

**Counter Example:**

The estimate of incoming pixel dist yields an unbiased measure. For instance, assuming no change in the scene, the incoming dist will be identical to one of the predefined distributions, $f_o \sim N_3(\vec{\mu}_o, \sigma_o^2 I)$.. Thus:

$$\tilde{J}(f_o, g) = \frac{1}{\sigma_o^2}\left(\overrightarrow{\mu_g} - \overrightarrow{u_o}\right)^T\left(\overrightarrow{\mu_g} - \overrightarrow{\mu_o}\right) = 0,$$

and $\tilde{J}(f_i,g) \neq 0; \forall i \neq o$; i.e. this is
consistent with the hypothesis.
The measure defined in [PM], however, yields to the wrong measurement when using a predefined $\sigma_g$ (e.g. $\sigma_g$ = 25). This results into a non-zero divergence measure,

$$J(f_o, g) = \frac{3}{2}\left(\frac{\sigma_i}{25} - \frac{25}{\sigma_i}\right)^2 \neq 0 \qquad .$$

Which contradicts the hypothesis.
For illustration purposes, we assumed a block of pixels is represented by a three-distribution model as shown in FIG. 5 at 510. The three distributions are selected as the highest probability distributions from the initial model. The distributions are normalized by providing weights that add to one. The weights are based on a count of the sample. When a match is found, such as when no motion is detected and the new image matches the model, the weights are updated using adaptive weights based on FIFO methods. Both weights and variances are updated. The most recent sample, N, is used to determine the new weights. N may be 100, as in one embodiment of the model initialization, or another number as desired. Distribution is updated by including the incoming block/pixel into the new statistics.
When a match is not found the update is performed only after a number of hits (i.e. consequent non-matches with the same incoming distribution) is reached. The minimum required number of hits in one embodiment is equal to N times the weight of the smallest $w_i(t)$. Once the minimum number of hits is reached, the update is performed in a way that guarantees the inclusion of the incoming distribution by using it to replace the lowest weighted current distribution.
The method described above allows identification of foreground pixels or ROI in each processed frame. The method is implemented to run in the pixel domain as well as in the compression domain.

**Motion Detection Enhancements:**

The speed motion detection algorithm represents portions of images in grey scale pixels when such portions are not high in color content, or are not expected to have motion. These areas may be selected on initialization based on knowledge of an operator, or may be selected based on a real time assessment of the scene. Portions of images are represented with color pixels, RGB for portions of the images higher in color content or those that are expected to have higher probability of motion. The portions for representing in grey scale and color may also be determined based on a real time assessment of dynamic change in the area.

In one embodiment, frames comprise pixels that are grouped in blocks of pixels, each block being represented as a single average pixel. The distributions and other statistics may be based on an average pixel for each block. In further embodiments, the blocks of pixels are of different sizes. Portions of the scene or area requiring higher resolution to detect motion are represented by smaller blocks of pixels, while those requiring lower resolution may be represented by larger blocks of pixels. In one embodiment, the size of the blocks is varied based on depth of field. In still further embodiment, the number of values per pixel is varied between 1 and 5, and may be varied based on dynamics of motions or expectations.

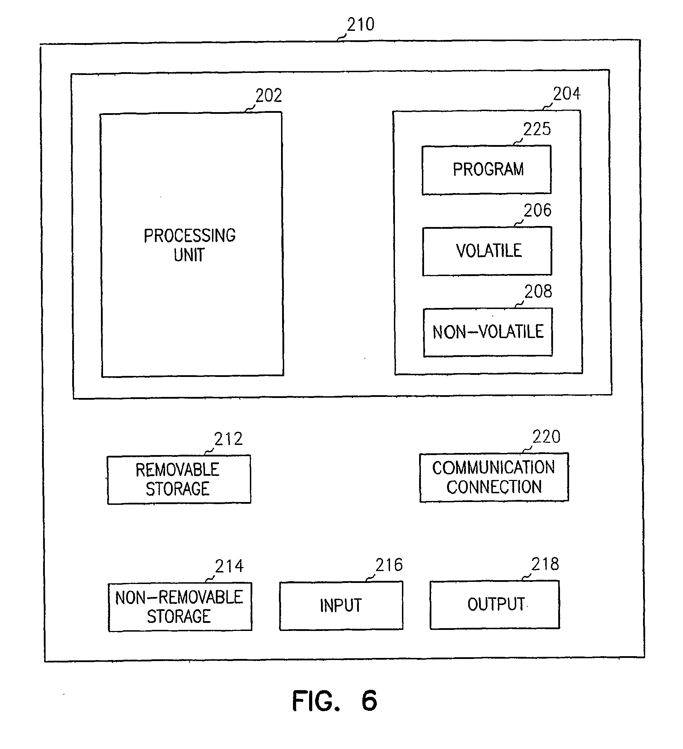

A block diagram of a computer system that executes programming for performing the above algorithm is shown in FIG. 6. A general computing device in the form of a computer 610, may include a processing unit 602, memory 604, removable storage 612, and non-removable storage 614. Memory 604 may include volatile memory 606 and non-volatile memory 608. Computer 610 may include - or have access to a computing environment that includes - a variety of computer-readable media, such as volatile memory 606 and non-volatile memory 608, removable storage 612 and non-removable storage 614. Computer storage includes RAM, ROM, EPROM & EEPROM, flash memory or other memory technologies, CD ROM, Digital Versatile Disks (DVD) or other optical disk storage, magnetic cassettes, magnetic tape, magnetic disk storage or other magnetic storage devices, or any other medium capable of storing computer-readable instructions. Computer 610 may include or have access to a computing environment that includes input 616, output 618, and a communication connection 620. The computer may operate in a networked environment using a communication connection to connect to one or more remote computers. The remote computer may include a personal computer, server, router, network PC, a peer device or other common network node, or the like. The communication connection may include a Local Area Network (LAN), a Wide Area Network (WAN) or other networks.

Computer-readable instructions stored on a computer-readable medium are executable by the processing unit 602 of the computer 610. A hard drive, CD-ROM, and RAM are some examples of articles including a computer-readable medium. For example, a computer program 625 capable of providing a generic technique to perform access control check for data access and/or for doing an operation on one of the servers in a COM based system according to the teachings of the present invention may be included on a CD-ROM and loaded from the CD-ROM to a hard drive. The computer-readable instructions allow computer system 600 to provide generic access controls in a COM based computer network system having multiple users and servers.

Conclusion

A real-time segmentation method of moving objects is used to monitor their movements in large open spaces like parking lots, plazas, airport terminals, crossroads, large industrial plant floor, airport perimeter and gates, and other outdoor and indoor applications. Of particular interest is monitoring human and vehicular traffic intrusions and departures from a fixed scene. The method and devices are applied as the engine for detecting motions and tracking of traffics to analyze traffic and human movement patterns. These patterns can be informative and valuable for a security application.

The method is also useful in homeland security applications where human or vehicle traffic is monitored to investigate events, increase situational awareness of all activities, learn about an abnormal and suspicious events, and detect a threat before its occurrence.

Abandoned objects may be detected and traced back to whom they belong and how they have been introduced into the scene. Collection of traffic statistics around a commercial or government buildings are also valuable for security reasons and marketing reasons, or to support a functional redesign of the open space for better safety needs and traffic management.

The method is based on two advanced object motion detection stages. The fast segmentation stage applies intelligent sampling, and differencing techniques in compressed or uncompressed image domains The robust segmentation stage adopts a statistical mixture modeling approach and provides changes that improve the computational and functional performances of this stage. In addition, some embodiments of the method are suited to real-time, e.g. full frame rates at high spatial resolutions, applications. A resource management controller determines the sequencing, initialization and adaptive updates.

**Claims**

1. A method of detecting motion in a a monitored area, the method comprising:

receiving at a computer processor video images of the area; (140)
using a high speed motion detection algorithm executing in the processor to remove images in which a threshold amount of motion is not detected (180), wherein the high speed motion detection algorithm represents portions of images in grey scale pixels when such portions are not high in color content or are not expected to have motion, and

using a high performance motion detection algorithm executing in the processor on the remaining images to detect true motion from noise, (185)

wherein the high performance motion detection algorithm operates on images having pixels in grey scale for portions of the images low in color content, and having pixels in RGB or other color domain for portions of the images higher in color content, wherein the portions are based on an initial set up, or wherein the high performance detection algorithm operates on images having pixels in grey scale for selected portion of the images, and having pixels in RGB or other color domain for other portions of the images, wherein the portions are determined based on a real time assessment of dynamic change in the aera.

2. The method of claim 1 wherein the high speed detection algorithm (180) operates in a compressed image domain or in an uncompressed image domain.

3. The method of claim 1 wherein the high performance detection algorithm (185) operates in an image pixel domain.

4. The method of claim 1 wherein the images comprise pixels, and where such pixels are grouped in blocks of pixels, each block being represented as a single, i.e. average or median, unit in the color domain.

5. A system (100) for detecting motion in a monitored area, the system comprising:

means for receiving video images (140, 220) of the monitored area;
a fast video motion segmentation, VMS, module (120) that rejects still images that do not portray any motion, wherein the fast VMS module represents portions of the image in grey scale pixels when such portions are not high in color content or are not expected so have motion;
a robust VMS module (130) that detects motion of an object in the monitored area on the remaining images; and
a resource management controller (110) that initializes, controls, and adapts the fast and robust VMS modules;
wherein the robust VMS module operates on images having pixels in grey scale for portions of the images low in color content, and having pixels in RGB or other color domain for portions of the images higher in color content, wherein the portions are based on an initial set up, or wherein the high performance detection algorithm operates on images having pixels in grey scale for selected portion of the images, and having pixels in RGB or other color domain for other portions of the images, wherein the portions are determined based on a real time assessment of dynamic change in the aera.

**Patentansprüche**

1. Verfahren zum Detektieren von Bewegung in einem überwachten Bereich, wobei das Verfahren Folgendes umfasst:

Empfangen von Videobildern des Bereichs in einem Computerprozessor (140);
Verwenden eines Hochgeschwindigkeits-Bewegungsdetektionsalgorithmus, der in dem Prozessor ausgeführt wird, um Bilder zu entfernen, bei denen keine Schwellenmenge von Bewegung detektiert wird (180), wobei der Hochgeschwindigkeits-Bewegungsdetektionsalgorithmus Teile von Bildern in Graustufenpixeln repräsentiert, wenn solche Teile keinen hohen Farbgehalt aufweisen oder wenn von ihnen nicht erwartet wird, dass sie Bewegung aufweisen; und
Verwenden eines hochleistungsfähigen Bewegungsdetektionsalgorithmus, der in dem Prozessor ausgeführt wird, an den übrigen Bildern, um wahre Bewegung vor Rauschen zu detektieren (185),
wobei der hochleistungsfähige Bewegungsdetektionsalgorithmus an Bildern operiert, die für Teile der Bilder mit niedrigem Farbgehalt Pixel in Graustufen aufweisen und für Teile der Bilder mit höherem Farbgehalt Pixel in RGB oder einer anderen Farbdomäne aufweisen, wobei die Teile auf einer anfänglichen Einrichtung basieren, oder wobei der hochleistungsfähige Detektionsalgorithmus an Bildern operiert, die für ausgewählte Teile der Bilder Pixel in Graustufen aufweisen und für andere Teile der Bilder Pixel in RGB oder einer anderen Farbdomäne aufweisen, wobei die Teile auf der Basis einer Echtzeit-Bewertung dynamischer Änderung in dem Bereich bestimmt werden.

2. Verfahren nach Anspruch 1, wobei der Hochgeschwindigkeits-Detektionsalgorithmus (180) in einer komprimierten Bilddomäne oder in einer unkomprimierten Bilddomäne operiert.

**3.** Verfahren nach Anspruch 1, wobei der hochleistungsfähige Detektionsalgorithmus (185) in einer Bildpixeldomäne operiert.

**4.** Verfahren nach Anspruch 1, wobei die Bilder Pixel umfassen und wobei solche Pixel in Blöcken von Pixeln gruppiert werden, wobei jeder Block als eine einzelne, d.h. mittlere oder Median-Einheit in der Farbdomäne repräsentiert wird.

**5.** System (100) zum Detektieren von Bewegung in einem überwachten Bereich, wobei das System Folgendes umfasst:

Mittel zum Empfangen von Videobildern (140, 220) des überwachten Bereichs;
ein Modul (120) zurschnellen Videobewegungssegmentierung bzw. VMS, das Standbilder, die keinerlei Bewegung porträtieren, zurückweist, wobei das schnelle VMS-Modul Teile des Bildes in Graustufenpixeln repräsentiert, wenn solche Teile keinen hohen Farbgehalt aufweisen oder von ihnen nicht erwartet wird, dass sie Bewegung aufweisen,
ein robustes VMS-Modul (130), das Bewegung eines Objekts in dem überwachten Bereich auf den übrigen Bildern detektiert; und
eine Betriebsmittelverwaltungssteuerung (110), die das schnelle und das robuste VMS-Modul initialisiert, steuert und anpasst;
wobei das robuste VMS-Modul an Bildern operiert, die für Teile der Bilder mit niedrigem Farbgehalt Pixel in Graustufen aufweisen und für Teile der Bilder mit höherem Farbgehalt Pixel in RGB oder einer anderen Farbdomäne aufweisen, wobei die Teile auf einer anfänglichen Einrichtung basieren, oder wobei der hochleistungsfähige Detektionsalgorithmus an Bildern operiert, die für ausgewählte Teile der Bilder Pixel in Graustufen aufweisen und für andere Teile der Bilder Pixel in RGB oder einer anderen Farbdomäne aufweisen, wobei die Teile auf der Basis einer Echtzeit-Bewertung dynamischer Änderung in dem Bereich bestimmt werden.

**Revendications**

**1.** Procédé permettant de détecter un mouvement dans une zone surveillée, le procédé comprenant :

la réception (140) d'images vidéo de la zone au niveau d'un processeur d'ordinateur,
l'utilisation (180) d'un algorithme de détection de mouvement à grande vitesse, lequel s'exécute dans le processeur afin d'éliminer des images dans lesquelles on ne détecte pas une valeur de seuil de mouvement,
l'algorithme de détection de mouvement à grande vitesse représentant des parties d'images dans des pixels d'échelle de gris lorsque de telles parties ne présentent pas de contenu élevé en termes de couleur ou ne sont pas attendues présenter un mouvement, et
l'utilisation (185) d'un algorithme de détection de mouvement à hautes performances, lequel s'exécute dans le processeur sur les images restantes afin de détecter un mouvement vrai du bruit,
dans lequel l'algorithme de détection de mouvement à hautes performances s'applique sur des images comportant des pixels d'échelle de gris pour des parties des images présentant un contenu faible en termes de couleur, et comportant des pixels dans le domaine RVB ou dans tout autre domaine de couleurs pour des parties des images présentant un contenu plus élevé en termes de couleur, les parties étant fondées sur une structure initiale, ou dans lequel l'algorithme de détection à hautes performances s'applique sur des images comportant des pixels en échelle de gris pour des parties sélectionnées des images et comportant des pixels dans le domaine RVB ou dans tout autre domaine de couleurs pour d'autres parties des images, les parties étant déterminées sur la base d'une évaluation en temps réel de toute modification dynamique dans la zone.

**2.** Procédé selon la revendication 1, dans lequel l'algorithme de détection à grande vitesse (180) s'applique dans le domaine des images compressées ou dans le domaine des images non compressées.

**3.** Procédé selon la revendication 1, dans lequel l'algorithme de détection à hautes performances (185) s'applique dans un domaine de pixels d'image.

**4.** Procédé selon la revendication 1, dans lequel les images comprennent des pixels et où de tels pixels sont groupés en blocs de pixels, chaque bloc étant représenté sous forme d'une unité simple, c'est-à-dire moyenne ou médiane, dans le domaine de couleurs.

**5.** Système (100) permettant de détecter un mouvement dans une zone surveillée, le système comprenant :

un moyen permettant de recevoir des images vidéo (140, 220) de la zone surveillée,

un module de segmentation de mouvement vidéo, VMS, rapide (120) qui rejette des images fixes qui ne représentent aucun mouvement, dans lequel le module de segmentation VMS rapide représente des parties de l'image en pixels d'échelle de gris lorsque de telles parties ne présentent pas de contenu élevé en termes de couleur ou ne sont pas attendues présenter un mouvement,

un module de segmentation VMS (130) robuste qui détecte le mouvement d'un objet dans la zone surveillée des images restantes, et

un contrôleur de gestion de ressources (110) qui initialise, commande et adapte les modules de segmentation VMS rapide et robuste,

dans lequel le module de segmentation VMS robuste s'applique sur des images comportant des pixels en échelle de gris pour des parties des images présentant un contenu faible en termes de couleur et comportant des pixels dans le modèle RVB ou dans tout autre domaine de couleurs pour des parties des images présentant un contenu plus élevé en termes de couleur,

dans lequel les parties sont fondées sur une structure initiale, ou dans lequel l'algorithme de détection à hautes performances s'applique sur des images comportant des pixels en échelle de gris pour des parties sélectionnées des images et comportant des pixels dans le domaine RVB ou dans tout autre domaine de couleurs pour d'autres parties des images, les parties étant déterminées sur la base d'une évaluation en temps réel de toute modification dynamique dans la zone.

EP 1 673 730 B1

CAMERA SPECIFICATION,
VIEW GEOMETRY

OPERATION
CONTROLLER
110

100

VIDEO
IN
140

150
$D_1$

120
DECOMPRESSION
175

HIGH SPEED
MOTION DETECTION

NO OP.
165

180

160
$D_2$

185
HIGH PERFORMANCE
MOTION DETECTION
130

NO OP.
170

MOTION
CHARACTERISTICS,
TRACK

FIG. 1

FIG. 2

FIG. 3

EP 1 673 730 B1

FIG. 4A

FIG. 4B

430

$$N\left[\bar{\mu}_1, \sigma_1^2\right]$$

$$\omega_1(t)$$

FIG. 4C

510

$$N\left[\bar{\mu}_1, \sigma_1^2\right] \qquad N\left[\bar{\mu}_2, \sigma_2^2\right] \qquad N\left[\bar{\mu}_3, \sigma_3^2\right]$$

$$\omega_1(t) \qquad \omega_2(t) \qquad \omega_3(t)$$

FIG. 5

210

202

204

225

PROGRAM

206

VOLATILE

208

NON-VOLATILE

PROCESSING
UNIT

212

REMOVABLE
STORAGE

220

COMMUNICATION
CONNECTION

214

NON-REMOVABLE
STORAGE

216

INPUT

218

OUTPUT

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003025599 A

**Non-patent literature cited in the description**

- Deter: detection of events for threat evaluation and recognition. *machined vision and application,* 23 July 2003, vol. 15 (1), 29-45
- **H. Jeffreys.** Theory of Probability. Universal Press, 1948
- **V. Morellas ; Y. Pavlidis et al.** *DETER: Detection of Events for Threat Evaluation and Recognition,* 1999